# EUROPEAN PATENT APPLICATION

(11) **EP 2 110 404 A2**
(43) Date of publication of application: **21.10.2009**
(21) Application number: 09250436.4
(22) Date of filing: 19.02.2009
(51) Int. Cl.: C08K 9/00

(54) **Flame retardant additive**

(30) Priority: 21.02.2008 JP 2008039750
(71) Applicant: Nissin Chemical Industry Co., Ltd., Echizen-shi, Fukui-ken (JP)
(72) Inventor: Fukuzumi, Takeshi, Echizen-shi, Fukui-ken (JP); Shirazawa, Keiichi, Echizen-shi, Fukui-ken (JP)
(74) Representative: Nash, David Allan

(57) **Abstract**

This invention relates to a flame retardant additive which does not become slimy when brought in contact with warm water. The flame retardant additive comprises a first compound composed of a nitrogen-containing heterocycle compound and a phosphate, and this first compound is surface treated with at least one hydrophobic compound comprising an organosilicon compound.

## Description

### TECHNICAL FIELD

This invention relates to a flame retardant additive exhibiting high flame retardancy which does not generate a halogen gas, and which does not become slimy when brought in contact with warm water. The flame retardant additive comprises a first compound composed of a nitrogen-containing heterocycle compound and a phosphate wherein the first compound is surface treated with a hydrophobic compound.

### BACKGROUND OF THE INVENTION

Various flame retardant additives have been used for imparting flame retardancy with elastomers and coating compositions. However, use of a halogen-containing compound alone or in combination with an antimony compound such as antimony oxide as a flame retardant in a resin or emulsion which has been the main stream of flame retardancy technology has become difficult since such product is associated with the problem of the generation of toxic gases such as a halogen gas and carbon monoxide in the case of fire. Amount of toxic gas generated in the case of fire can be reduced by using a metal hydroxide for the flame retardant additive. However, in the case of the metal hydroxide, a large amount should be incorporated to realize sufficient flame retardancy, and this leads to the loss of workability and mechanical strength.

In the meanwhile, phosphorus compounds have been proposed as a promising choice, and they have been widely used. Of the wade range of phosphorus compounds, phosphate ester is associated with the fear of bleed out onto the surface of the resin to which it has been added as well as physiological activity to various organisms. Red phosphorus which has high flame retardancy has the problem of red coloring of the resin and dissolution of the phosphate. On the other hand, melamine phosphate and melamine polyphosphate have high flame retardancy simultaneously with high safety since it is an inorganic compound. In addition, melamine phosphate and melamine polyphosphate also have the advantage of reduced dissolution compared to the red phosphorus.

Exemplary applications of the melamine phosphate and melamine polyphosphate include flame retardant (backing agent) for textiles used for automobile sheets.

However, in the case of the melamine phosphate or the melamine polyphosphate, the surface of the textile sheet becomes slippery and slimy when it is kept under the conditions of high temperature and high humidity or when warm water is spilt over the textile sheet. This sliminess invites another problem in the production. When a textile fabric is treated by a flame retardant, an emulsion of the melamine polyphosphate and acrylic resin is coated on the rear side of the textile to adhere the textile fabric with the urethane backing sheet. In this step of the adhesion, sliminess may invite incorrect positioning of the textile sheet on the backing sheet.

JP-A 2000-63842 and JP-A 2001-503075 propose solutions for these problems in which the melamine phosphate or melamine polyphosphate powder is covered on its surface with a coating. However, the proposals disclosed in these documents are associated with the problems of aggregation of the powder particles due to the complicated production process, insufficient water resistance, and loss of dispersibility in various resins.

### SUMMARY OF THE INVENTION

The present invention has been completed in view of the situation as described above, and an object of the present invention is to provide a flame retardant additive comprising a first compound composed of a nitrogen-containing heterocycle compound and a phosphate which is surface treated with a hydrophobic compound, and exhibiting no sliminess even in contact with warm water.

The inventors of the present invention made an extensive study to realize the object as described above, and found that sliminess of the flame retardant additive when it is brought in contact with warm water can be eliminated when it is produced by treating the surface of a first compound composed of a nitrogen-containing heterocycle compound and a phosphate with at least one hydrophobic compound comprising an organosilicon compound, which is preferably a hydrolytic condensation product of an organosilane or an organosiloxane represented by the general formula (1) and a silane coupling agent represented by the general formula (2) in the presence of an organic acid or an inorganic acid. The present invention has been completed on the basis of such finding.

Accordingly, the present invention provides the flame retardant additive as described below.
[1] A flame retardant additive comprising a first compound composed of a nitrogen-containing heterocycle compound and a phosphate, wherein the first compound is surface treated with at least one hydrophobic compound comprising an organosilicon compound.
[2] The flame retardant additive according to the above [1] wherein the first compound composed of a nitrogen-containing heterocycle compound and a phosphate is at least one member selected from the group consisting of melamine phosphate, melamine polyphosphate, melamine pyrophosphate, melam polyphosphate, and melem polyphosphate.
[3] The flame retardant additive according to the above [1] or [2] wherein the hydrophobic compound is a hydrolytic condensation product produced by hydrolytic condensation of
   100 parts by weight of an organosilane or an organosiloxane represented by general formula (1):

   (R¹)ₐ(OR²)_{b}SiO_{(4-a-b)/2} (1)

   wherein R¹ is an alkyl group containing 1 to 6 carbon atoms, R² is an alkyl group containing 1 to 4 carbon atoms, a is 0.75 to 1.5, b is a positive number of 0.2 to 3 satisfying the relation: 0.9 < a+b ≤ 4; with
   0.5 to 49 parts by weight of a silane coupling agent which is an amino group-containing alkoxysilane represented by general formula (2):

   R³R⁴NR⁵-SiR⁶ₙ(OR²)₃₋ₙ (2)

   wherein R² is as defined above, R³ and R⁴ are independently hydrogen atom or an alkyl group or an amionoalkyl group containing 1 to 15 carbon atoms, R⁵ is a divalent hydrocarbon group containing 1 to 18 carbon atoms, R⁶ is an alkyl group containing 1 to 4 carbon atoms, and n is 0 or 1, or its partial hydrolytic condensation product;
   in the presence of an organic acid or an inorganic acid.
[4] The flame retardant additive according to the above [1] or [2] wherein the hydrophobic compound is a hydrolytic condensation product produced by hydrolytic condensation of
   100 parts by weight of an organosilane or an organosiloxane represented by general formula (1):

   (R¹)ₐ(OR²)_{b}SiO_{(4-a-b)/2} (1)

   wherein R¹ is an alkyl group containing 1 to 6 carbon atoms, R² is an alkyl group containing 1 to 4 carbon atoms, a is 0.75 to 1.5, b is a positive number of 0.2 to 3 satisfying the relation: 0.9 < a+b ≤ 4 and
   0.1 to 20 parts by weight of a compound containing a bis(alkoxysilyl) group represented by general formula (3):

   (R¹)ₖ(OR²)₃₋ₖSi-Y-S'(R¹)ₖ(OR²)₃₋ₖ (3)

   wherein R¹ and R² are as defined above, Y is a divalent organic group -(OSi(R⁷)₂)ₘO- or -R-(SiR⁷₂O)ₘ-SiR⁷₂-R- (wherein R⁷ is an alkyl group containing 1 to 6 carbon atoms, R is a divalent hydrocarbon group containing 1 to 6 carbon atoms, and m is an integer of 1 to 30), and k is 1, 2, or 3, or its partial hydrolytic condensate; with
   0.5 to 49 parts by weight of a silane coupling agent which is an amino group-containing alkoxysilane represented by general formula (2):

   R³R⁴NR⁵-SiR⁶ₙ(OR²)₃₋ₙ (2)

   wherein R² is as defined above, R³ and R⁴ are independently hydrogen atom or an alkyl group or an amionoalkyl group containing 1 to 15 carbon atoms, R⁵ is a divalent hydrocarbon group containing 1 to 18 carbon atoms, R⁶ is an alkyl group containing 1 to 4 carbon atoms, and n is 0 or 1, or its partial hydrolytic condensation product;
   in the presence of an organic acid or an inorganic acid.
[5] The flame retardant additive according to the above [3] wherein the hydrophobic compound further comprises fine particles of an inorganic oxide at an amount of 0.1 to 10 parts by weight in relation to 100 parts by weight of the organosilane or organosiloxane of formula (1).
[6] The flame retardant additive according to the above [4] wherein the hydrophobic compound further comprises fine particles of an inorganic oxide at an amount of 0.1 to 10 parts by weight in relation to 100 parts by weight of the organosilane or organosiloxane of formula (1).
[7] The flame retardant additive according to any one of the above [1] to [6] which is produced by stirring the first compound composed of a nitrogen-containing heterocycle compound and a phosphate and the hydrophobic compound in the presence of an organic solvent, and distilling off the organic solvent.

The flame retardant additive comprising a first compound composed of a nitrogen-containing heterocycle compound and a phosphate wherein the first compound is surface treated with a hydrophobic compound of the present invention exhibits high flame retardancy, and it does not generate a halogen gas or become slimy when brought in contact with warm water.

### DETAILED DESCRIPTION OF THE INVENTION

The flame retardant additive of the present invention is a first compound composed of a nitrogen-containing heterocycle compound and a phosphate wherein the first compound is surface treated with at least one hydrophobic compound comprising an organosilicon compound.

In the present invention, the first compound composed of a nitrogen-containing heterocycle compound and a phosphate may preferably have an average particle size as measured by a laser scattering granular variation counter of up to 25 µm, and more preferably up to 18 µm since the compound having a smaller particle size has better dispersibility. However, the price increases with the decrease in the particle size, and therefore, the average particle size suitable for use in the present invention in view of the price is 2 to 25 µm, and in particular, 2 to 18 µm.

Examples of the first compound composed of a nitrogen-containing heterocycle compound and a phosphate used in the present invention include melamine phosphate, melamine polyphosphate, melamine pyrophosphate, melam polyphosphate, and melem polyphosphate, which may be used alone or in combination of two or more. Commercially available products may also be used, and exemplary such commercial products include PHOSMEL-100 (product name, manufactured by Nissan Chemical Industries, LTD.), PHOSMEL-200 (product name, manufactured by Nissan Chemical Industries, LTD.), MPP-B (product name, manufactured by Sanwa Chemical Co., Ltd.), BUDIT3141 (product name, manufactured by BUDENHEIM), Planelon NP (product name, manufactured by Mitsui Fine Chemicals, Inc.), and MELAPUR200 (manufactured by Ciba).

The hydrophobic compound used is the one comprising an organosilicon compound such as a silicone oil, silicone resin, or silicone rubber.

Exemplary silicone oils include dimethylsilicone oil, methylphenylsilicone oil, amino-modified silicone oil, epoxy-modified silicone oil, carboxy-modified silicone oil, methacryl-modified silicone oil, and mercapto-modified silicone oil.

Exemplary silicone resins include trimethylsiloxy silicic acid.

Exemplary silicone rubbers include dimethylpolysiloxane.

Among the hydrophobic compounds as mentioned above, the hydrophobic compound used for imparting the water repellency is preferably a silicone water repellent containing a hydrolytic condensate of an organosilicon compound and an amino group-alkoxysilane or its partial hydrolysate produced in the presence of an organic acid or an inorganic acid. More specifically, the silicone water repellent containing the silicone compound as described below (the hydrolytic condensation product [I] or [II]) is particularly excellent in both coating properties and water repellency.

### [I] A hydrolytic condensation product produced by hydrolytic condensation of

100 parts by weight of (i) an organosilane or an organosiloxane represented by general formula (1):

(R¹)ₐ(OR²)_{b}SiO_{(4-a-b)/2} (1)

wherein R¹ is an alkyl group containing 1 to 6 carbon atoms, R² is an alkyl group containing 1 to 4 carbon atoms, a is a positive number of 0.75 to 1.5, b is a positive number of 0.2 to 3 satisfying the relation: 0.9 < a+b s 4; with
0.5 to 49 parts by weight of (ii) a silane coupling agent which is an amino group-containing alkoxysilane represented by general formula (2):

R³R⁴NR⁵-SiR⁶ₙ(OR²)₃₋ₙ (2)

wherein R² is as defined above, R³ and R⁴ are independently hydrogen atom, an alkyl group or an amionoalkyl group each containing 1 to 15 carbon atoms, R⁵ is a divalent hydrocarbon group containing 1 to 18 carbon atoms, R⁶ is an alkyl group containing 1 to 4 carbon atoms, and n is 0 or 1, or its partial hydrolytic condensation product,
in the presence of an organic acid or an inorganic acid.

### [II] A hydrolytic condensation product produced by hydrolytic condensation of

100 parts by weight of the component (i); and
0.1 to 20 parts by weight of (iii) a compound containing a bis(alkoxysilyl) group represented by general formula (3):

(R¹)ₖ(OR²)₃₋ₖSi-Y-Si(R¹)ₖ(OR²)₃₋ₖ (3)

wherein R¹ and R² are as defined above, Y is a divalent organic group -(OSi(R⁷)₂)ₘO- or -R-(SiR⁷₂O)ₘ-SiR⁷₂-R- (wherein R⁷ is an alkyl group containing 1 to 6 carbon atoms, R is a divalent hydrocarbon group containing 1 to 6 carbon atoms, m is an integer of 1 to 30, and k is 1, 2, or 3) or its partial hydrolytic condensation product; with
0.5 to 49 parts by weight of the component (ii);
in the presence of an organic acid or an inorganic acid.

The hydrolytic condensation product [I] or [II] may also contain

0.1 to 10 parts by weight of (iv) fine particles of an inorganic oxide.

Next, components (i) to (iv) are described.

The component (i) an organosilane or an organosiloxane represented by general formula (1):

(R¹)ₐ(OR²)_{b}SiO_{(4-a-b)/2} (1)

wherein R¹ is an alkyl group containing 1 to 6 carbon atoms, R² is an alkyl group containing 1 to 4 carbon atoms, a is 0.75 to 1.5, b is a positive number of 0.2 to 3 satisfying the relation: 0.9 < a+b s 4.

In the formula (1), R¹ is an alkyl group containing 1 to 6 carbon atoms, and preferably 1 to 3 carbon atoms. Exemplary such alkyl groups include methyl group, ethyl group, n-propyl group, isopropyl group, n-butyl group, isobutyl group, n-pentyl group, and n-hexyl group, and the most preferred is methyl group. R² is an alkyl group containing 1 to 4 carbon atoms, and the preferred are methyl group, ethyl group, n-propyl group, isopropyl group, n-butyl group, and isobutyl group. The most preferred are methyl group and ethyl group.

Typical examples of the compound represented by the formula (1) include CH₃Si(OCH₃)₃, CH₃Si(OC₂H₅)₃, CH₃Si(OCH(CH₃)₂)₃, CH₃CH₂Si(OCH₃)₃, CH₃CH₂Si(OC₂H₅)₃, CH₃CH₂Si(OCH(CH₃)₂)₃, C₃H₇Si(OCH₃)₃, C₃H₇Si(OC₂H₅)₃, C₃H₇Si(OCH(CH₃)₂)₃, C₄H₉Si(OCH₃)₃, C₄H₉Si(OC₂H₅)₃, C₄H₉Si(OCH(CH₃)₂)₃, C₅H₁₁Si(OCH₃)₃, C₅H₁₁Si(OC₂H₅)₃, C₅H₁₁Si(OCH(CH₃)₂)₃, C₆H₁₃Si(OCH₃)₃, C₆H₁₃Si(OC₂H₅)₃, and C₆H₁₃Si(OCH(CH₃)₂)₃.

In the present invention, such silane may be used either alone or in combination of two or more, and partial hydrolytic condensate of such silane may also be used.

The preferred for use in the present invention is an alkoxy group-containing siloxane produced by partial hydrolytic condensation of one or more such silanes. This partial hydrolytic condensate may contain 2 to 10 silicon atoms, and in particular, 2 to 4 silicon atoms. The partial hydrolytic condensate may also be the one produced by reacting an alkyltrialkoxysilane containing 1 to 6 carbon atoms with methanol or ethanol in water. In this case, the siloxane oligomer may contain 2 to 6 silicon atoms, and in particular, 2 to 4 silicon atoms. More specifically, the siloxane oligomer is preferably a siloxane dimer represented by the formula: [CH₃(OR²)₂Si]₂O wherein R² is as defined above. In this case, the siloxane dimer may also contain a siloxane trimer or a siloxane tetramer.

The component (i) is preferably the one having a viscosity as measured at 25°C by a capillary viscometer of up to 300 mm²/s, and in particular, 1 to 100 mm²/s.

Next, the component (ii) is a silane coupling agent selected from the amino group-containing alkoxysilanes represented by the following general formula (2):

R³R⁴NR⁵-SiR⁶ₙ(OR²)₃₋ₙ (2)

or their partial hydrolytic condensates. In the formula (2), R² is as defined above, R³ and R⁴ are independently hydrogen atom, or an alkyl group or an amionoalkyl group containing 1 to 15 carbon atoms, preferably 1 to 8 carbon atoms, and more preferably 1 to 4 carbon atoms, R⁵ is a divalent hydrocarbon group containing 1 to 18 carbon atoms, preferably 1 to 8 carbon atoms, and more preferably 3 carbon atoms, R⁶ is an alkyl group containing 1 to 4 carbon atoms, and n is 0 or 1.

Exemplary alkyl groups and amionoalkyl groups of R³ and R⁴ in the formula (2) include methyl group, ethyl group, propyl group, butyl group, aminomethyl group, aminoethyl group, aminopropyl group, and amionobutyl group. Exemplary R⁵ include alkylene groups such as methylene group, ethylene group, propylene group, and butylene group, and exemplary R⁶ include methyl group, ethyl group, propyl group, and butyl group.

Examples of the amino group-containing alkoxysilane of formula (2) include H₂N(CH₂)₂Si(OCH₃)₃, H₂N(CH₂)₂Si(OCH₂CH₃)₃, H₂N(CH₂)₃Si(OCH₃)₃, H₂N(CH₂)₃Si(OCH₂CH₃)₃, CH₃NH(CH₂)₃Si(OCH₃)₃, CH₃NH(CH₂)₃Si(OCH₂CH₃)₃, CH₃NH(CH₂)₅Si(OCH₃)₃, CH₃NH(CH₂)₅Si(OCH₂CH₃)₃, H₂N(CH₂)₂NH(CH₂)₃Si(OCH₃)₃, H₂N(CH₂)₂NH(CH₂)₃Si(OCH₂CH₃)₃, CH₃NH(CH₂)₂NH(CH₂)₃Si(OCH₃)₃, CH₃NH(CH₂)₂NH(CH₂)₃Si(OCH₂CH₃)₃, C₄H₉NH(CH₂)₂NH(CH₂)₃Si(OCH₃)₃, C₄H₉NH(CH₂)₂NH(CH₂)₃Si(OCH₂CH₃)₃, H₂N(CH₂)₂SiCH₃(OCH₃)₂, H₂N(CH₂)₂SiCH₃(OCH₂CH₃)₂, H₂N(CH₂)₃SiCH₃(OCH₃)₂, H₂N(CH₂)₃SiCH₃(OCH₂CH₃)₂, CH₃NH(CH₂)₃SiCH₃(OCH₃)₂, CH₃NH(CH₂)₃SiCH₃(OCH₂CH₃)₂, CH₃NH(CH₂)₅SiCH₃(OCH₃)₂, CH₃NH(CH₂)₅SiCH₃(OCH₂CH₃)₂, H₂N(CH₂)₂NH(CH₂)₃SiCH₃(OCH₃)₂, H₂N(CH₂)₂NH(CH₂)₃SiCH₃(OCH₂CH₃)₂, CH₃NH(CH₂)₂NH(CH₂)₃SiCH₃(OCH₃)₂, CH₃NH(CH₂)₂NH(CH₂)₃SiCH₃(OCH₂CH₃)₂, C₄H₉NH(CH₂)₂NH(CH₂)₃SiCH₃(OCH₃)₂, C₄H₉NH(CH₂)₂NH(CH₂)₃SiCH₃(OCH₂CH₃) and partial hydrolytic condensates thereof, which may be used alone or in combination of two or more.

Among these, the preferred are
N-(2-aminoethyl)-3-aminopropyltrimethoxysilane,
N-(2-aminoethyl)-3-aminopropylmethyldimethoxysilane,
N-(2-aminoethyl)-3-aminopropyltriethoxysilane,
N-(2-aminoethyl)-3-aminopropylmethyldiethoxysilane,
3-aminopropyltrimethoxysilane,
3-aminopropylmethyldimethoxysilane,
3-aminopropyltriethoxysilane,
3-aminopropylmethyldiethoxysilane, and partial hydrolytic condensates thereof.

The component (iii) is a bis(alkoxysilyl) group represented by general formula (3):

(R¹)ₖ(OR²)₃₋ₖSi-Y-Si(R¹)ₖ(OR²)₃₋ₖ (3)

or its partial hydrolytic condensate. In the formula (3), R¹ and R² are as defined above, Y is a divalent organic group -(OSi(R⁷)₂)ₘO- or -R-(SiR⁷₂O)ₘ-SiR⁷₂-R- (wherein R⁷ is an alkyl group containing 1 to 6 carbon atoms, R is a divalent hydrocarbon group containing 1 to 6 carbon atoms, and m is an integer of 1 to 30), and k is 1, 2, or 3.

Examples of R¹ and R² in the formula (3) are the same as those described for the formula (1).

Y is an organic group containing 1 to 20 carbon atoms, and in particular, 1 to 10 carbon atom optionally containing a halogen atom. Preferably, Y is an alkylene group or a fluorine-containing alkylene group represented by the formula: -(CH₂)ₐ(CF₂)_{b}(CH₂)_{c}- (wherein a is 1 to 6, b is 1 to 10, and c is 1 to 6), -(OSi(R⁷)₂)ₘO- group, or -R-(SiR⁷₂O)ₘ-SiR⁷₂-R- group. In these formulae, R⁷ is an alkyl group containing 1 to 6 carbon atoms, and preferably 1 to 3 carbon atoms, and exemplary such alkyl groups include methyl group, ethyl group, n-propyl group, isopropyl group, n-butyl group, isobutyl group, n-pentyl group, and n-hexyl group. The most preferred is methyl group. R is a divalent hydrocarbon group containing 1 to 6 carbon atoms, and more preferably 2 to 3 carbon atoms. R is preferably an alkylene group such as methylene group, ethylene group, propylene group, and butylene group.

m is an integer of 1 to 30, and in particular, 5 to 20. k is 1, 2, or 3, and preferably 2 or 3. When the water repellency should be particularly high, k is preferably 3.

Examples of such compound containing a bis(alkoxysilyl) group include (CH₃O)₃SiCH₂Si(OCH₃)₃, (CH₃O)₃SiCH₂CH₂Si(OCH₃)₃, (CH₃O)₃SiCH₂CH₂CH₂CH₂Si(OCH₃)₃, (CH₃O)₃SiCH₂CH₂CH₂CH₂CH₂CH₂Si(OCH₃)₃, (CH₃O)₃SiCH₂CH₂CH₂CH₂CH₂CH₂CH₂CH₂Si(OCH₃)₃, (CH₃O)₃SiCH₂CH₂CH₂CH₂CH₂CH₂CH₂CH₂CH₂CH₂Si(OCH₃)₃, (CH₃O)₂(CH₃)SiCH₂Si(CH₃)(OCH₃)₂, (CH₃O)₂(CH₃)SiCH₂CH₂Si(CH₃)(OCH₃)₂, (CH₃O)₂(CH₃)SiCH₂CH₂CH₂CH₂Si(CH₃)(OCH₃)₂, (CH₃O)₂(CH₃)SiCH₂CH₂CH₂CH₂CH₂CH₂Si(CH₃)(OCH₃)₂, (CH₃O)₂(CH₃)SiCH₂CH₂CH₂CH₂CH₂CH₂CH₂CH₂Si(CH₃)(OCH₃)₂, (CH₃O)₂(CH₃)SiCH₂CH₂CH₂CH₂CH₂CH₂CH₂CH₂CH₂CH₂Si(CH₃)(OCH₃)₂, (CH₃O)₃SiCH₂CH₂C₄F₈CH₂CH₂Si(OCH₃)₃, (CH₃O)₃SiCH₂CH₂C₆F₁₂CH₂CH₂Si(OCH₃)₃, (CH₃O)₃SiCH₂CH₂C₈F₁₆CH₂CH₂Si(OCH₃)₃, (CH₃O)₃SiCH₂CH₂C₁₀F₂₀CH₂CH₂Si(OCH₃)₃, (CH₃O)₂(CH₃)SiCH₂CH₂C₄F₈CH₂CH₂Si(CH₃)(OCH₃)₂, (CH₃O)₂(CH₃)SiCH₂CH₂C₆F₁₂CH₂CH₂Si(CH₃)(OCH₃)₂, (CH₃O)₂(CH₃)SiCH₂CH₂C₈F₁₆CH₂CH₂Si(CH₃)(OCH₃)₂, (CH₃O)₂(CH₃)SiCH₂CH₂C₁₀F₂₀CH₂CH₂Si(CH₃)(OCH₃)₂, (CH₃O)₃Si(OSi(CH₃)₂)OSi(OCH₃)₃, (CH₃O)₃Si(OSi(CH₃)₂)₂OSi(OCH₃)₃, (CH₃O)₃Si(OSi(CH₃)₂)₄OSi(OCH₃)₃, (CH₃O)₃Si(OSi(CH₃)₂)₆OSi(OCH₃)₃, (CH₃O)₃Si(OSi(CH₃)₂)₈OSi(OCH₃)₃, (CH₃O)₃Si(OSi(CH₃)₂)₁₀OSi(OCH₃)₃, (CH₃O)₃SiCH₂CH₂Si(CH₃)₂OSi(CH₃)₂CH₂CH₂Si(OCH₃)₃, (CH₃O)₃SiCH₂CH₂(Si(CH₃)₂O)₃Si(CH₃)₂CH₂CH₂Si(OCH₃)₃, (CH₃O)₃SiCH₂CH₂(Si(CH₃)₂O)₅Si(CH₃)₂CH₂CH₂Si(OCH₃)₃, (CH₃O)₃SiCH₂CH₂(Si(CH₃)₂O)₇Si(CH₃)₂CH₂CH₂Si(OCH₃)₃, and (CH₃O)₃SiCH₂CH₂(Si(CH₃)₂O)₉Si(CH₃)₂CH₂CH₂Si(OCH₃)₃.

Among these, the preferred are (CH₃O)₃SiCH₂CH₂CH₂CH₂CH₂CH₂Si(OCH₃)₃, (CH₃O)₂(CH₃)SiCH₂CH₂CH₂CH₂CH₂CH₂Si(CH₃)(OCH₃)₂, (CH₃O)₃SiCH₂CH₂C₄F₈CH₂CH₂Si(OCH₃)₃, (CH₃O)₃SiCH₂CH₂C₆F₁₂CH₂CH₂Si(OCH₃)₃, (CH₃O)₃Si(OSi(CH₃)₂)₆OSi(OCH₃)₃, (CH₃O)₃Si(OSi(CH₃)₂)₈OSi(OCH₃)₃, (CH₃O)₃Si(OSi(CH₃)₂)₁₀OSi(OCH₃)₃, (CH₃O)₃SiCH₂CH₂(Si(CH₃)₂O)₅Si(CH₃)₂CH₂CH₂Si(OCH₃)₃, (CH₃O)₃SiCH₂CH₂(Si(CH₃)₂O)₇Si(CH₃)₂CH₂CH₂Si(OCH₃)₃, and (CH₃O)₃SiCH₂CH₂(Si(CH₃)₂O)₉Si(CH₃)₂CH₂CH₂Si(OCH₃)₃, which may be used alone or in combination of two or more. Use of their partial hydrolytic condensate is also preferable.

The component (iv) is fine particles of an inorganic oxide, and exemplary oxides include silicon oxide, titanium oxide, zinc oxide, aluminum oxide, and cerium oxide. The particles may preferably have an average particle size as measured by a laser scattering granular variation counter of 1 to 200 nm, and more preferably 5 to 100 nm. When the average particle size exceeds 200 nm, the matrix may become white or the water repellency may become insufficient. On the other hand, when the average particle size is less than 1 nm, the water repellent may have insufficient stability. While the particles are not particularly limited for their shape, use of particles with spherical shape is preferable. Such fine particles of an inorganic oxide are preferably used by dispersing in water or other solvent.

In view of the cost and handling convenience, the particles are preferably colloidal silica. The colloidal silica may be a dispersion of silica fine particles in water or an alcohol such as methanol, ethanol, isobutanol, or diacetone alcohol, namely, colloidal dispersion of silica fine particles in water or an alcohol solvent. Exemplary products include SNOWTEX O, SNOWTEX O-40, SNOWTEX OXS, SNOWTEX OS, SNOWTEX OL, SNOWTEX OUP, methanol silica sol, and IPA-ST (all manufactured by Nissan Chemical Industries, LTD.), which may be used alone or in combination of two or more.

When the silicone water repellent solely comprises the components (i) and (ii), the component (ii) may be used at 0.5 to 49 parts by weight, and more preferably at 5 to 30 parts by weight in relation to 100 parts by weight of the component (i). When the component (ii) is used at an amount less than 0.5 parts by weight, the silicone water repellent may suffer from insufficient stability whereas use of the component (ii) in excess of 49 parts by weight may result in poor water repellency and severe yellowing upon treatment of the component (A).

In terms of molar amount, the components (i) and (ii) may be used such that amount of Si atom in the component (ii) is 0.01 to 0.3 mole, and in particular, 0.05 to 0.2 mole in relation to 1 mole of Si atom in the component (i).

When the silicone water repellent comprises the components (i) and (ii) and the component (iii) and/or (iv), the component (ii) may be used at 0.5 to 49 parts by weight, and more preferably at 5 to 30 parts by weight in relation to 100 parts by weight of the component (i). When the component (ii) is used at an amount less than 0.5 parts by weight, the silicone water repellent may suffer from insufficient stability whereas use of the component (ii) in excess of 49 parts by weight may results in poor water repellency and severe yellowing upon treatment of the component (A).

The component (iii) is preferably used at 0.1 to 20 parts, and more preferably at 0.5 to 10 parts by weight in relation to 100 parts by weight of the component (i). When the component (iii) is used at an amount less than 0.1 parts by weight, the product may suffer from insufficient water repellency, whereas incorporation in excess of 20 parts by weight is economically disadvantageous.

The component (iv) is preferably used at 0.1 to 10 parts by weight, and more preferably at 0.5 to 5 parts by weight in relation to 100 parts by weight of the component (i). When the component (iv) is used at an amount less than 0.1 parts by weight, the product may suffer from insufficient water repellency, whereas incorporation in excess of 10 parts by weight is economically disadvantageous, and the silicone water repellent may suffer from insufficient stability.

The component (iv) may be added together with the components (i) and (ii) or the components (i), (ii), and (iii) at the time of their hydrolytic condensation. Alternatively, the component (iv) may be added to the hydrolytic condensate of the components (i) and (ii) or the components (i), (ii), and (iii).

When the silicone water repellent is prepared by using such component (i) with the component (ii), or by using the components (i) and (ii) with the component (iii) and/or (iv), these components may be hydrolytically condensed in the presence of an organic acid or an inorganic acid.

In this case, the component (i) (when the component (iii) and/or (iv) is added, the component (iii) and/or (iv) is mixed with the component (i)) is preferably first hydrolyzed in the presence of an organic acid or an inorganic acid, and the resulting hydrolysate is mixed with the component (ii) for further hydrolysis and condensation in the presence of an organic acid or an inorganic acid.

The organic acid or the inorganic acid used in the hydrolysis of the component (i) (when the component (iii) and/or (iv) is added, the component (iii) and/or (iv) is mixed with the component (i)) is at least one member selected from hydrochloric acid, sulfuric acid, nitric acid, methanesulfonic acid, formic acid, acetic acid, propionic acid, citric acid, oxalic acid, and maleic acid, and the most preferred are acetic acid and propionic acid. The acid may be used at an amount of 2 to 40 parts by weight, and in particular, at 3 to 15 parts by weight in relation to 100 parts by weight of the component (i).

The hydrolysis is preferably carried out after diluting the reactants with the solvent to a suitable degree. Preferable solvents used for such dilution include alcohol solvents, and the particularly preferred are methanol, ethanol, isopropyl alcohol, and tertiary butyl alcohol. These solvents are preferably used at an amount of 50 to 300 parts by weight, and most preferably at 70 to 200 parts by weight in relation to 100 parts by weight of the component (i) (total of component (i) with component (iii) and/or (iv) when the component (iii) and/or (iv) is added). When the solvent is used at an amount less than 50 parts by weight, condensation may be promoted to an excessive degree while the amount in excess of 300 parts by weight may result in an unduly prolonged period for the hydrolysis.

The amount of water added for the hydrolysis of the component (i) (or the component (i) and the component (iii) and/or (iv)) is preferably 0.5 to 4 mole, and more preferably 1 to 3 mole in relation to 1 mole of the component (i) or the total of the component (i) and the component (iii) and/or (iv). When the water is added at an amount less than 0.5 mole, excessive alkoxy group may remain in the product whereas amount in excess of 4 mole may result in excessive condensation. When the component (iv) is colloidal silica dispersed in water, this water may be used as the water for the hydrolysis.

The hydrolysis of the component (i) or the components (i), (iii) and/or (iv) is preferably conducted under the reaction conditions such that the reaction proceeds at a temperature of 10 to 40°C, and more preferably at 20 to 30°C for a reaction time of 1 to 3 hours.

The thus obtained hydrolysate of the component (i) or the components (i) and (iii) and/or (iv) is reacted with the component (ii) preferably by adding the component (ii) to the hydrolysate of the component (i) or the components (i) and (iii) and/or (iv) to further promote hydrolytic condensation in the presence of an organic acid or an inorganic acid.

This hydrolytic condensation is also preferably carried out after diluting the reactants with the solvent to a suitable degree. Preferable solvents used for such dilution include those used in the hydrolysis of the component (i) or the components (i) and (iii) and/or (iv).

The reaction condition are preferably such that the reaction proceeds at a temperature of 60 to 100°C, and more preferably at 64 to 90°C for a reaction time of 1 to 3 hours, and more preferably for 1.5 to 2.5 hours.

When the reaction is completed, the temperature is increased to a temperature higher than the boiling point of the solvent to thereby remove the solvent such as an alcohol. In such a case, the solvent is preferably removed to the degree so that content of the solvent including all alcohols in the reaction system (including the alcohol used as the reaction solvent and the alcohol generated as a byproduct) is up to 30% by weight, and more preferably up to 10% by weight.

In the present invention, water repellency can be realized by simply mixing the hydrophobic compound with the first compound composed of a nitrogen-containing heterocycle compound and a phosphate. However, the hydrophobic compound is preferably coated on the surface of the first compound composed of a nitrogen-containing heterocycle compound and a phosphate. The surface coating can be accomplished by various methods known in the art such as coacervation, drying in liquid, hotmelt microencapsulation, spray drying, and curing in liquid. In the preferred embodiment, the first compound composed of a nitrogen-containing heterocycle compound and a phosphate is mixed with the hydrophobic compound (the silicone water repellent) which had been dissolved in a volatile solvent, and the solvent is removed by heating the mixture.

The first compound composed of a nitrogen-containing heterocycle compound and a phosphate and the hydrophobic compound are preferably used at a ratio such that the first compound composed of a nitrogen-containing heterocycle compound and a phosphate would be 80 to 99.8% by weight, and more preferably 90 to 97% by weight; and the hydrophobic compound would be 0.2 to 20% by weight, and more preferably 3 to 10% by weight in relation to 100% by weight of the total of the first compound composed of a nitrogen-containing heterocycle compound and a phosphate and the hydrophobic compound. When the amount of the hydrophobic compound is insufficient, the product may suffer from insufficient water resistance and water repellency, whereas use of an excessive amount of the hydrophobic compound is economically disadvantageous.

The solvent used for dissolving the hydrophobic compound in the surface coating is the liquid used for dispersing the first compound composed of a nitrogen-containing heterocycle compound and a phosphate, and the solvent is preferably an organic solvent which is less likely to react with such compound. Exemplary such solvents include methanol, ethanol, isopropyl alcohol, hexane, toluene, acetone, tetrahydrofuran, butanol, ethyl acetate, 1-propanol, and 2-propanol.

The thus produced flame retardant additive of the present invention may be blended in a resin (a thermoplastic resin or a thermosetting resin) or an elastomer, in a coating agent or a sealant, and the like to produce a flame retardant composition which has been imparted with the flame retardancy. When the composition is an emulsion-type coating composition, the flame retardant additive may be incorporated at an amount of 25 to 400% by weight, an more preferably at 40 to 250% by weight in relation to the solid content of the emulsion. When the composition is a flame retardant composition containing a resin or an elastomer as its base polymer, the flame retardant additive may be incorporated at an amount of 0.1 to 30% by weight, and more preferably at 5 to 20% by weight in relation to the base polymer.

The flame retardant composition may further comprise a combination of phosphor-containing compound and a nitrogen-containing compound, or alternatively, a polyhydric alcohol. The flame retardant composition may also contain a popular flame retardant such as a metal hydroxide.

The polyhydric alcohol is an acyclic or cyclic compound having two ore more hydroxyl groups bonded thereto, and exemplary polyhydric alcohols include pentaerythritol, dipentaerythritol, tripentaerythritol, pentitols (such as adonitol and arabitol), hexytols (such as dulcitol and inositol), saccharides (such as amylose and xylan), and their derivatives (such as N-methylglucamine).

The flame retardant composition of the present invention may also contain various additives depending on the intended use of the flame retardant composition at the amount that does not adversely affect the characteristic properties of the composition. Exemplary additives include neutralizers, acid trapping agents, antioxidant, stabilizer, light stabilizer, compatibilizing agent, other non-halogen flame retardant, lubricant, filler, adhesion aid, and anticorrosive.

The neutralizers and acid trapping agents which can be used in the present invention include calcium hydroxide, magnesium hydroxide, hydrotalcite, and ion-exchange resin.

Exemplary antioxidants which may be used in the present invention include 2,6-di-t-butyl-4-methyl phenol, n-octadecyl-3-(3',5'-di-t-butyl-4-hydroxyphenyl)propionate, tetrakis[methylene-3-(3,5-di-t-butyl-4-hydroxyphenyl)-propionate]methane, tris(3,5-di-t-butyl-4-hydroxybenzyl)isocyanurate, 4,4'-butylidene bis-(3-methyl-6-t-butylphenol), triethylene glycol-bis[3-(3-t-butyl-4-hydroxy-5-methylphenyl)propionate], 3,9-bis{2-[3-(3-t-butyl-4-hydroxy-5-methylphenyl)propionyl-oxy]-1,1-dimethylethyl}-2,4,8,10-tetraoxaspiro[5,5]undecane, 4,4-thiobis-(2-t-butyl-5-methyl phenol), 2,2-methylenebis-(6-t-butyl-methyl phenol), 4,4-methylenebis-(2,6-di-t-butylphenol), 1,3,5-trimethyl-2,4,6-tris(3,5-di-t-butyl-4-hydroxy benzyl)-benzene, trisnonylphenylphosphite, tris(2,4-di-t-butylphenyl)phosphite, distearyl pentaerythritolphosphite, bis(2,4-di-t-butylphenyl) pentaerythritolphosphite, bis(2,6-di-t-butyl-4-methylphenyl) pentaerythritolphosphite, 2,2-methylenebis(4,6-di-t-butylphenyl)octylphosphite, tetrakis(2,4-di-t-butylphenyl)-4,4'-biphenylene-di-phosphonite, dilauryl-3,3'-thiodipropionate, dimyristyl-3,3'-thiodipropionate, pentaerythritol tetrakis(3-laurylthiopropionate), 2,5,7,8-tetramethyl-2(4,8,12-trimethyldecyl)-chroman-2-ol, 5,7-di-t-butyl-3-(3,4-dimethylphenyl)-3H-benzofuran-2-one, 2-[1-(2-hydroxy-3,5-di-t-pentyl phenyl)ethyl]-4,6-dipentyl-phenyl acrylate, 2-t-butyl-6-(3-t-butyl-2-hydroxy-5-methylbenzyl)-4-methylphenyl acrylate, and tetrakis(methylene)-3-(dodecylthiopropionate)methane.

The stabilizers which can be used in the present invention include metal soap stabilizers such as lithium stearate, magnesium stearate, calcium laurate, calcium ricinoleate, calcium stearate, barium laurate, barium ricinoleate, barium stearate, zinc laurate, zinc ricinoleate, and zinc stearate; mercapto organotin stabilizers such as laurate, malate, and mercapto stabilizers; lead stabilizers such as lead stearate and tribasic lead sulfate; epoxy compounds such as epoxidated vegetable oil; phosphite compounds such as alkyl allylphosphite and trialkylphosphite; dibenzoylmethane; β-diketone compounds such as dehydroacetic acid; polyols such as sorbitol, mannitol, and pentaerythritol; hydrotalcites, and zeolites.

Exemplary light stabilizers which may be used in the present invention include benzotriazole UV absorbents, benzophenone UV absorbents, salicylate UV absorbents, cyano acrylate UV absorbents, oxanilide UV absorbents, and hindered amine light stabilizers.

The flame retardant composition may be used by the method commonly used in the art. For example, when the flame retardant composition is used for treating a fiber to thereby impart the fiber with flame retardancy, the fiber may be impregnated in the composition (for example, an emulsion type coating agent having the flame retardant additive of the present invention dispersed therein) and dried to thereby coat the surface of the fiber with the flame retardant composition.

### EXAMPLES

Next, the present invention is described in further detail by the following Synthetic Examples, Examples, and the Comparative Example, which by no means limit the scope of the present invention. In the following Examples, the viscosity is the value measured at 25°C by using a capillary viscometer, and the weight average molecular weight is the value in terms of polystyrene measured by GPC analyzer. In the following Examples, the average particle size is the value measured by using a laser scattering granular variation counter.

### Synthetic Example 1

To a 500 ml four neck flask equipped with a condenser, thermometer, and dropping funnel were charged 85 g (0.37 mole in terms of dimer) of methyltrimethoxysilane oligomer, 154 g of methanol, and 5.1 g of acetic acid. While the mixture was stirred, 6.8 g (0.37 mole) of water was added, and the mixture was stirred at 25°C for 2 hours followed by the addition of 17.7 g (0.08 mole) of 3-aminopropyltriethoxysilane. The mixture was heated to the reflux temperature of the methanol, and after allowing the reaction to proceed for 1 hour, methanol was removed by distillation by using an ester adaptor until the inner temperature reached 110°C to obtain 81 g of a pale yellow transparent solution having a viscosity of 71 mm²/s (weight average molecular weight, 1,100). Residual methanol content in this system was 5% by weight (silicone water repellent 1).

### Synthetic Example 2

To a 500 ml four neck flask equipped with a condenser, thermometer, and dropping funnel were charged 85 g (0.37 mole in terms of dimer) of methyltrimethoxysilane oligomer, 4.3 g of 1,6-ditrimethoxysilyl hexane ((CH₃O)₃SiCH₂CH₂CH₂CH₂CH₂CH₂Si(OCH₃)₃), and 2.6 g of hydrophobic silica (average particle size, about 12 nm). To this mixture were also added 154 g of methanol and 5.1 g of acetic acid. While the mixture was stirred, 6.8 g (0.37 mole) of water was added, and the mixture was stirred at 25°C for 2 hours followed by the addition of 17.7 g (0.08 mole) of 3-aminopropyltriethoxysilane. The mixture was heated to the reflux temperature of the methanol, and after allowing the reaction to proceed for 1 hour, methanol was removed by distillation by using an ester adaptor until the inner temperature reached 110°C to obtain 81 g of a pale yellow transparent solution having a viscosity of 71 mm²/s (weight average molecular weight, 1,200). Residual methanol content in this system was 5% by weight (silicone water repellent 2).

### Example 1

90 parts by weight of melamine phosphate (N content, 35% by weight; average particle size, 10 µm) was mixed with 10 parts by weight of silicone water repellent 1 produced in Synthetic Example 1 and 100 parts by weight of ethanol. After stirring the mixture for 30 minutes, ethanol was distilled off under reduced pressure to obtain silicone-treated melamine phosphate having an average particle size of 12 µm.

### Example 2

The surface treatment was conducted by repeating the procedure of Example 1 except for the use of a complex salt of melamine polyphosphate, melam polyphosphate, and melem polyphosphate (P content, 11% by weight; average particle size, 2.5 µm; a mixture of 50% by weight of melamine, 40% by weight of melam, and 10% by weight of melem) to yield a silicone-treated complex salt of melamine polyphosphate, melam polyphosphate, and melem polyphosphate having an average particle size of 4 µm.

### Example 3

95 parts by weight of melamine phosphate (N content, 35% by weight; average particle size, 10 µm) was mixed with 5 parts by weight of silicone water repellent 1 produced in Synthetic Example 1 and 100 parts by weight of ethanol. After stirring the mixture for 30 minutes, ethanol was distilled off under reduced pressure to obtain silicone-treated melamine phosphate having an average particle size of 12 µm.

### Example 4

90 parts by weight of melamine phosphate (N content, 35% by weight; average particle size, 10 µm) was mixed with 10 parts by weight of silicone water repellent 2 produced in Synthetic Example 2 and 100 parts by weight of ethanol. After stirring the mixture for 30 minutes, ethanol was distilled off under reduced pressure to obtain silicone-treated melamine phosphate having an average particle size of 12 µm.

### Comparative Example 1

The melamine phosphate (N content, 35% by weight; average particle size, 10 µm) was used with no surface treatment.

The method and the criteria used for in the evaluation are as described below.

### 1. Sliminess

The flame retardant additives and the melamine phosphate obtained in the Examples and the Comparative Example were dispersed in water at 25°C and warm water at 60°C at 20% by weight respectively. This dispersion was evaluated for its sliminess by a panel of 10 people by touching with their fingers.

### 2. Dissolution

The flame retardant additives and the melamine phosphate obtained in the Examples and the Comparative Example were dispersed in warm water at 60°C at 1% by weight. The dispersion was filtered, and the dissolution (%) of the phosphate was evaluated by measuring amount of the phosphate in the filtrate.

**Table 1**

| | Surface treatment | The amount used for the surface treatment ^{*1} (parts by weight) | Sliminess (25°C) | Sliminess (60°C) | Dissolution (%) |
|---|---|---|---|---|---|
| Example 1 | Silicone water repellent 1 | 11.1 | no | no | 3.1 |
| Example 2 | Silicone water repellent 1 | 11.1 | no | no | 4.8 |
| Example 3 | Silicone water repellent 1 | 5.3 | no | no | 5.9 |
| Example 4 | Silicone water repellent 2 | 11.1 | no | no | 3.5 |
| Comparative Example 1 | none | 0 | yes | yes | 16.8 |

| | | | | | |
|---|---|---|---|---|---|
| *1: The amount in relation to 100 parts by weight of the compound comprising a nitrogen-containing heterocycle compound and a phosphate. | | | | | |

## Claims

1. A flame retardant additive comprising a first compound composed of a nitrogen-containing heterocycle compound and a phosphate, wherein the first compound is surface treated with at least one hydrophobic compound comprising an organosilicon compound.

2. The flame retardant additive according to claim 1 wherein the first compound composed of a nitrogen-containing heterocycle compound and a phosphate is at least one member selected from the group consisting of melamine phosphate, melamine polyphosphate, melamine pyrophosphate, melam polyphosphate, and melem polyphosphate.

3. The flame retardant additive according to claim 1 or 2 wherein the hydrophobic compound is a hydrolytic condensation product produced by hydrolytic condensation of
100 parts by weight of an organosilane or an organosiloxane represented by general formula (1):
(R¹)ₐ(OR²)_{b}SiO_{(4-a-b)/2} (1)
wherein R¹ is an alkyl group containing 1 to 6 carbon atoms, R² is an alkyl group containing 1 to 4 carbon atoms, a is 0.75 to 1.5, b is a positive number of 0.2 to 3 satisfying the relation: 0.9 < a+b ≤ 4; with
0.5 to 49 parts by weight of a silane coupling agent which is an amino group-containing alkoxysilane represented by general formula (2):
R³R⁴NR⁵-SiR⁶ₙ(OR²)₃₋ₙ (2)
wherein R² is as defined above, R³ and R⁴ are independently hydrogen atom or an alkyl group or an amionoalkyl group containing 1 to 15 carbon atoms, R⁵ is a divalent hydrocarbon group containing 1 to 18 carbon atoms, R⁶ is an alkyl group containing 1 to 4 carbon atoms, and n is 0 or 1, or its partial hydrolytic condensation product;
in the presence of an organic acid or an inorganic acid.

4. The flame retardant additive according to claim 1 or 2 wherein the hydrophobic compound is a hydrolytic condensation product produced by hydrolytic condensation of
100 parts by weight of an organosilane or an organosiloxane represented by general formula (1):
(R¹)ₐ(OR²)_{b}SiO_{(4-a-b)/2} (1)
wherein R¹ is an alkyl group containing 1 to 6 carbon atoms, R² is an alkyl group containing 1 to 4 carbon atoms, a is 0.75 to 1.5, b is a positive number of 0.2 to 3 satisfying the relation: 0.9 < a+b ≤ 4 and
0.1 to 20 parts by weight of a compound containing a bis(alkoxysilyl) group represented by general formula (3):
(R¹)ₖ(OR²)₃₋ₖSi-Y-Si(R¹)ₖ(OR²)₃₋ₖ (3)
wherein R¹ and R² are as defined above, Y is a divalent organic group -(OSi(R⁷)₂)ₘO- or -R-(SiR⁷₂O)ₘ-SiR⁷₂-R- (wherein R⁷ is an alkyl group containing 1 to 6 carbon atoms, R is a divalent hydrocarbon group containing 1 to 6 carbon atoms, and m is an integer of 1 to 30), and k is 1, 2, or 3, or its partial hydrolytic condensate; with
0.5 to 49 parts by weight of a silane coupling agent which is an amino group-containing alkoxysilane represented by general formula (2):
R³R⁴NR⁵-SiR⁶ₙ(OR²)₃₋ₙ (2)
wherein R² is as defined above, R³ and R⁴ are independently hydrogen atom or an alkyl group or an amionoalkyl group containing 1 to 15 carbon atoms, R⁵ is a divalent hydrocarbon group containing 1 to 18 carbon atoms, R⁶ is an alkyl group containing 1 to 4 carbon atoms, and n is 0 or 1, or its partial hydrolytic condensation product;
in the presence of an organic acid or an inorganic acid.

5. The flame retardant additive according to claim 3 wherein the hydrophobic compound further comprises fine particles of an inorganic oxide at an amount of 0.1 to 10 parts by weight in relation to 100 parts by weight of the organosilane or organosiloxane of formula (1).

6. The flame retardant additive according to claim 4 wherein the hydrophobic compound further comprises fine particles of an inorganic oxide at an amount of 0.1 to 10 parts by weight in relation to 100 parts by weight of the organosilane or organosiloxane of formula (1).

7. The flame retardant additive according to any one of claims 1 to 6 which is produced by stirring the first compound composed of a nitrogen-containing heterocycle compound and a phosphate and the hydrophobic compound in the presence of an organic solvent, and distilling off the organic solvent.
